(19) Europäisches Patentamt
European Patent Office
Office européen des brevets

(11) **EP 1 301 003 B1**

(12) **EUROPEAN PATENT SPECIFICATION**

(45) Date of publication and mention
of the grant of the patent:
**17.01.2007 Bulletin 2007/03**

(51) Int Cl.:
*H04L 27/26* (2006.01)       *H04L 1/06* (2006.01)
*H04B 7/08* (2006.01)

(21) Application number: **02021726.1**

(22) Date of filing: **25.09.2002**

(54) **Diversity Receiver unit for receiving an ofdm signal**

Diversitätsempfänger für ein OFDM Signal

Récepteur de diversité pour un signal OFDM

(84) Designated Contracting States:
**DE FR GB**

(30) Priority: **28.09.2001 JP 2001303406**

(43) Date of publication of application:
**09.04.2003 Bulletin 2003/15**

(73) Proprietor: **KABUSHIKI KAISHA TOSHIBA**
**Tokyo 105-8001 (JP)**

(72) Inventors:
• **Sugimoto, Masahiko**
**Minato-ku,**
**Tokyo 105-8001 (JP)**
• **Seki, Takashi**
**Minato-ku,**
**Tokyo 105-8001 (JP)**

(74) Representative: **HOFFMANN EITLE**
**Patent- und Rechtsanwälte**
**Arabellastrasse 4**
**81925 München (DE)**

(56) References cited:
**EP-A- 0 975 101        EP-A- 1 045 543**
**DE-A- 19 849 318       US-A- 5 553 102**

**Description**

This invention relates to a receiver unit applied to, for example, an Orthogonal Frequency Division Multiplex (hereinafter referred to as an OFDM) modulation system and, in particular, an OFDM receiver unit of a diversity configuration.

In recent years, attention has been paid to an OFDM modulation system as a modulation system for territorial digital broadcasting and mobile communication. It is known that, in mobile communications, etc., reception is affected by a fading phenomenon, and that reception performance can be improved in a radio unit of a diversity configuration having a plurality of demodulation modules. This type of receiver unit improves the reception performance by complementing a signal in a demodulation module of less reception power which results from a variation with a signal in another module of less variation.

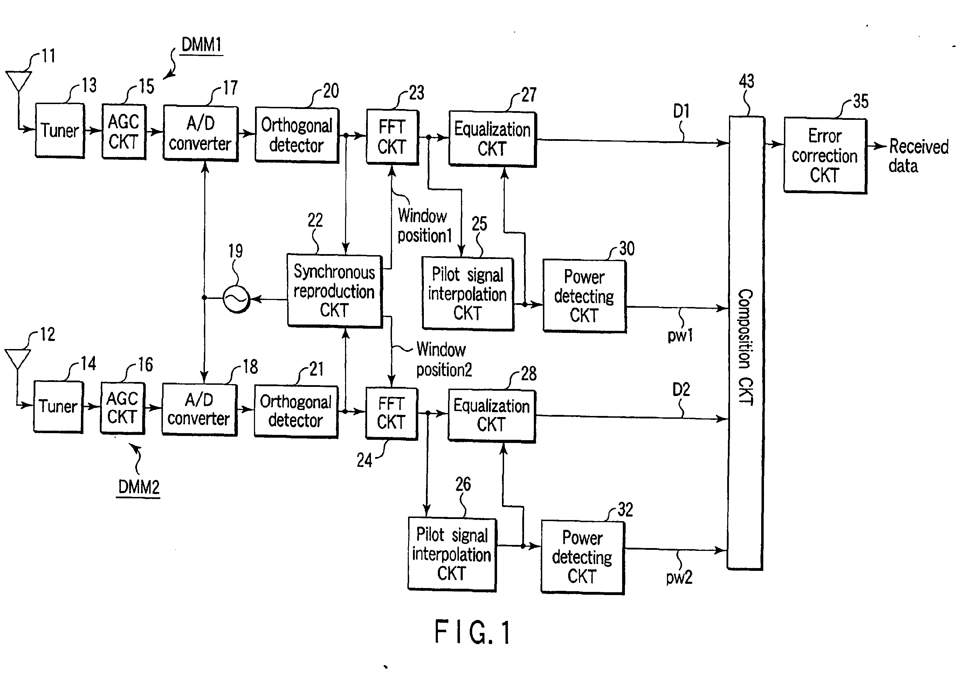

FIG. 1 shows one example of a conventional OFDM receiver unit using the diversity configuration. This OFDM receiver unit has two demodulation modules, DMM1 and DMM2, both of the same structure.

Signals received from antennas 11 and 12 are supplied to tuners 13 and 14 in the demodulation modules, respectively. In these tuners 13 and 14, the frequency of the respective input signal is converted to an intermediate frequency (IF) band. The output signals of the tuners 13 and 14 are supplied to automatic gain control (AGC) circuits 15 and 16, respectively. The AGC circuits, even if receiving varying level input signals, effect control such that the output signal levels are constant. The output signals of the AGC circuits 15 and 16 are supplied to A/D converters 17 and 18, respectively. These A/D converters 17 and 18 convert the input signals to digital signals in accordance with a clock signal supplied from a later-described local oscillator 19. The output signals of the A/D converters 17 and 18 are supplied to orthogonal detectors 20 and 21 where they are converted to complex basebands signals. The output signals of the orthogonal detectors are supplied to a synchronous reproduction circuit 22 and to fast Fourier transformation (FFT) circuits 23 and 24.

The synchronous reproduction circuit 22 performs clock reproducing control and FFT window position control with the use of a method, etc., of finding, for example, a correlation between an effective symbol period and a guard period of the OFDM reception signal. For this reason, the synchronous reproduction circuit 22 outputs a clock control signal and window position control signals.

In the clock reproducing control, the clock control signal from the synchronous reproduction circuit 22 is supplied to the local oscillator 19 and controls the local oscillator 19 so that a difference between the clock signals is made smaller. The output signal from the local oscillator 19 is supplied to the A/D converters 17 and 18. For this reason, both demodulating modules are operated by a common clock signal.

Further, the FFT circuits 23 and 24 demodulate a subcarrier signal of the OFDM signal. This subcarrier signal contains a data signal and pilot signal. In the FFT window position control, the window position signals 1 and 2 outputted from the synchronous reproduction circuit 22 are supplied as window position indicating signals to the FFT circuits 23 and 24. These window position signals 1 and 2 are used as a start timing for FFT processing (transformation from a time domain to a frequency domain). The window position signals 1 and 2 can be independently set to the FFT circuits 23 and 24. The FFT circuits 23 and 24 are designed to accommodate a difference in the start timing. For this reason, the demodulation data from the FFT circuits 23 and 24 are outputted from the FFT circuits 23 and 24 at all times in the same timing.

The output signal from the FFT circuit 23 is supplied to a pilot interpolation circuit 25 and to an equalization circuit 27. The output signal from the FFT circuit 24 is supplied to a pilot interpolation circuit 26 and to an equalization circuit 28. The respective pilot interpolation circuits 25 and 26 interpolate a pilot signal inserted in a defined position of the OFDM signal. The interpolated pilot signal reveals a transmission path characteristic. The respective equalization circuits 27 and 28 generate a demodulation signal (subcarrier signal) as an output by performing a complex division calculation on the pilot signal and demodulation data supplied from the FFT circuits 23 and 24. The modulation signal has its distortion corrected and is brought back to a mapping position of the signal of its own.

Further, the interpolated pilot signals which are outputted from the pilot interpolation circuits 25 and 26 are supplied to power detection circuits 30 and 32, respectively, where calculation is made on the powers of the pilot signals. The signal powers from the power detection circuits 30 and 32, together with the output signals from the equalization circuits 27 and 28, are supplied to a composition circuit 43.

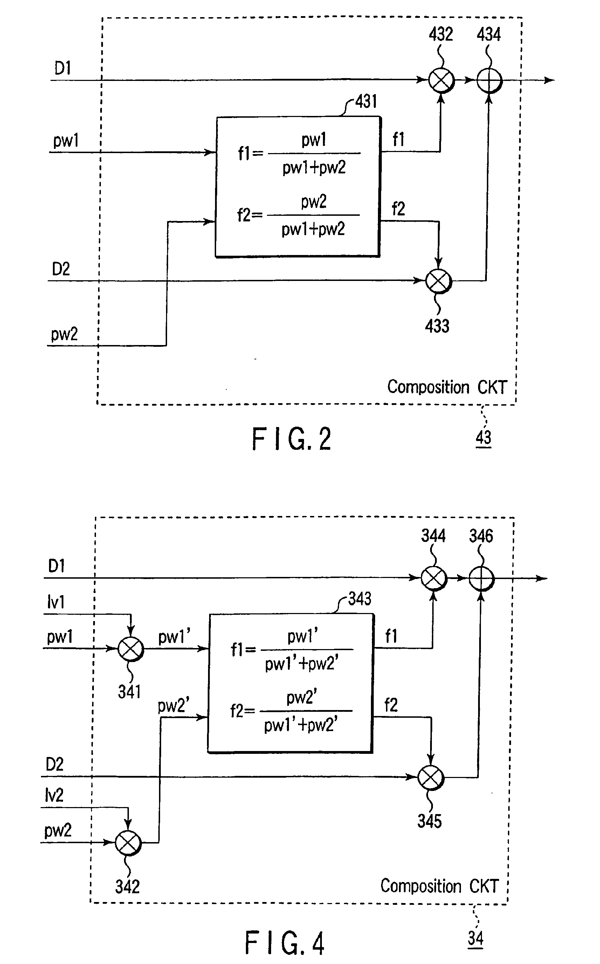

FIG. 2 shows one form of the composition circuit 43. In FIG. 2, the power values (pw1, pw2) of the pilot signals from the power detection circuits 30 and 32 are supplied to a proportion calculation section 431 where the following proportion values are calculated based on the power values pw1 and pw2 of the pilot signals.

$$f1 = pw1/(pw1 + pw2)$$

$$f2 = pw2/(pw1 + pw2)$$

The proportion value f1 is supplied to one input terminal of a multiplier 432 while, on the other hand, the proportion value f2 is supplied to one input terminal of a multiplier 433. A data signal D1 from the equalization circuit 27 in the demodulation module DMM1 is supplied to the other input terminal of the multiplier 432 and a data signal D2 from the equalization circuit 28 in the demodulation module DMM2 is supplied to the other input terminal of the multiplier 433. In these multipliers 432 and 433, the data signals D1 and D2 are weighted by the proportion values f1 and f2.

The output signals of the multipliers 432 and 433 are supplied to an adder 434 where these signals are added together. The data signals from the respective demodulation modules are composed in this series of processing. Suppose that, for example, the power value pw1 of the pilot signal is "1" and pw2 is "0". Then the proportion value f1 from the proportion calculation section 431 becomes "1" and f2 becomes "0". Therefore, the output signal of the multiplier 432 is delivered as composite data from the adder 434.

The composite signal is supplied to an error correction circuit 35 shown in FIG. 1 and, as a final output, received data is outputted from the error correction circuit 35.

As set out above, in mobile communications, a received signal is strongly affected by the fading phenomenon and a received power greatly varies. If the received power becomes lower due to this variation, the reliability of demodulated data is lowered and there is a higher possibility of errors. These errors cause a deterioration in reception performance.

As shown in the composition circuit 43, therefore, calculation is made on the ratio of the signal power values outputted from the power detection circuits 30 and 32 and weight addition is so made as to be less affected by the reception data which is outputted from the demodulation module of a smaller reception power. By doing so it is possible to improve the reception performance.

It is necessary to consider the fact that the AGC circuits 15 and 16 are provided to the input stages of the respective demodulation modules. That is, the AGC circuits 15 and 16 have their amplification gains raised, unlike the composition circuit 43, when the input signal is lower. Even if, therefore, there is a difference between the input signals of both the demodulation modules, control is made by the AGC circuits to attain a given level. It is, therefore, not possible to differentiate between the received signal and the AGC-amplified noise upon mere calculation on the ratio of the signal powers.

If the signals of the respective demodulation modules are independently AGC-controlled on the OFDM receiver unit using the diversity configuration, if the mere weights proportional to the powers of the received signals are used, the normal operation of the diversity is restricted only to the case where the reception states of the respective demodulation modules are to the same extent. Therefore, an OFDM receiver unit is desired which can perform faultless diversity operation even if the reception states of the respective demodulation modules differ.

EP-1 045 543 A2 describes a diversity receiver having two receiving sections and a soft/decision decoder providing confidence values for received decoded values. The values from the receiving sections are combined depending on the confidence values. A diversity receiver is described having a first demodulator circuit providing a succession of output values representing the received OFDM signal and providing confidence values representing a measure of confidence with which the received signals represent each of the output values. A channel state qualified soft decision combiner circuit then combines the signals based on confidence values supplied from the demodulators.

DE 198 49 318 A1 describes a diversity system having separate reception channels for OFDM signals. Confidence values are determined for each of the reception channels and the confidence values are used for weighing the OFDM signals. Channel correction values are determined based on pilot signals transmitted with the OFDM signal.

The object of the present invention is solved in particular by the subject-matter of the independent claim.

The invention can be more fully understood from the following detailed description when taken in conjunction with the accompanying drawings, in which:

FIG. 1 is a block diagram showing one form of a conventional OFDM receiver unit using a diversity configuration;

FIG. 2 is a block diagram showing one practical form of a composition circuit shown in FIG. 1;

FIG. 3 is a block diagram showing an OFDM receiver unit according to a first embodiment of the present invention;

FIG. 4 is a block diagram according to one practical form of a composition circuit shown in FIG. 3;

FIG. 5 is a block diagram showing one form of an S/N detection circuit shown in FIG. 3;

FIG. 6 is a block diagram showing one practical form of a decision circuit shown in FIG. 3;

FIG. 7 is a block circuit showing an OFDM receiver unit according to a second embodiment of the present invention;

FIG. 8 is a block diagram showing one form of a selection circuit shown in FIG. 7;

FIG. 9 is a block diagram showing an OFDM receiver unit according to a third embodiment of the present invention;

FIG. 10 is a block diagram showing one form of a decision circuit shown in FIG. 9;

FIG. 11 is a block diagram showing an OFDM receiver according to a fourth embodiment of the present invention, one form of a decision circuit thereof being shown;

FIG. 12 is a block diagram showing an OFDM receiver unit according to a fifth embodiment ;

FIG. 13 is a block diagram showing one practical form of a decision circuit shown in FIG. 12;

FIG. 14 is a block diagram showing an OFDM receiver unit according to a sixth embodiment ; and FIG. 15 is a block diagram showing an OFDM receiver unit according to a seventh embodiment.

The embodiments of the present invention will be described below with reference to the accompanying drawings.

(First Embodiment)

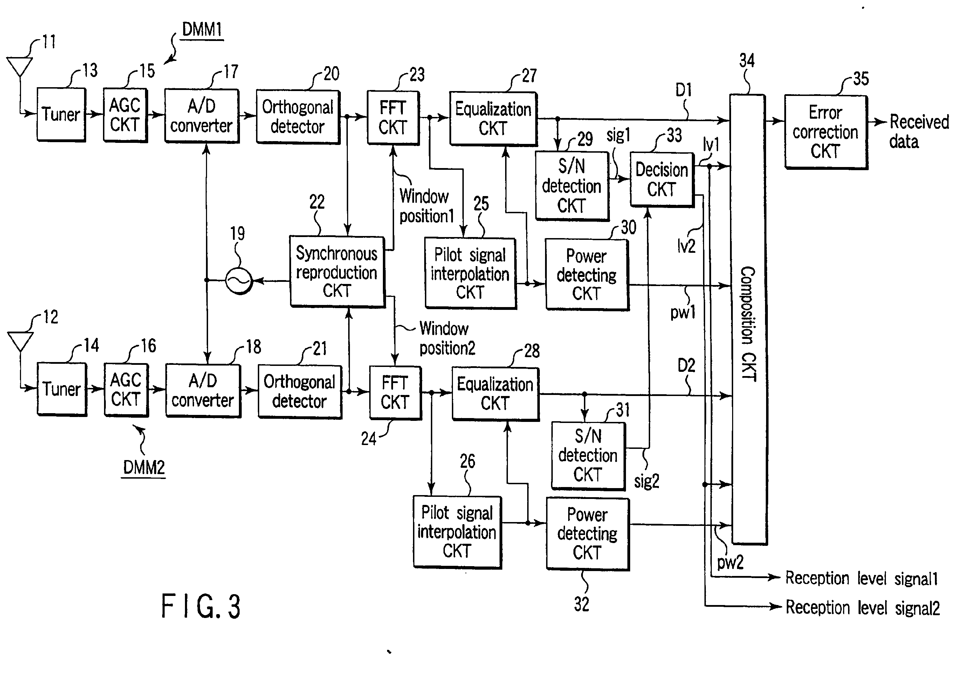

FIG. 3 shows a first embodiment of the present invention. The same reference numerals are employed to designate parts or elements corresponding to those shown in FIG. 1 and an explanation will be made below about those different portions only.

The first embodiment has the function of detecting a reception quality of each demodulation module so as to secure a correct diversity operation even if the reception states of the respective demodulation modules differ.

That is, in FIG. 3, an S/N detection circuit 29 is connected to the output terminal of an equalization circuit 27 and an S/N detection circuit 31 is connected to an output terminal of the equalization circuit 28. These S/N detection circuits 29 and 31 detect S/N ratioes of signals outputted from the equalization circuits 27 and 28, respectively, and the output signals of the S/N detection circuits 29 and 31 are supplied to a decision circuit 33.

The decision circuit 33 outputs decision signals Iv1 and Iv2 for deciding the reception qualities of both demodulation modules DMM1 and DMM2 on the basis of the signals supplied from the S/N detection circuits 29 and 31. These decision signals Iv1 and Iv2, as well as the signal powers from power detection circuits 30 and 32 and output signals from the equalization circuits 27 and 28, are supplied to a composition circuit 34 as an output circuit.

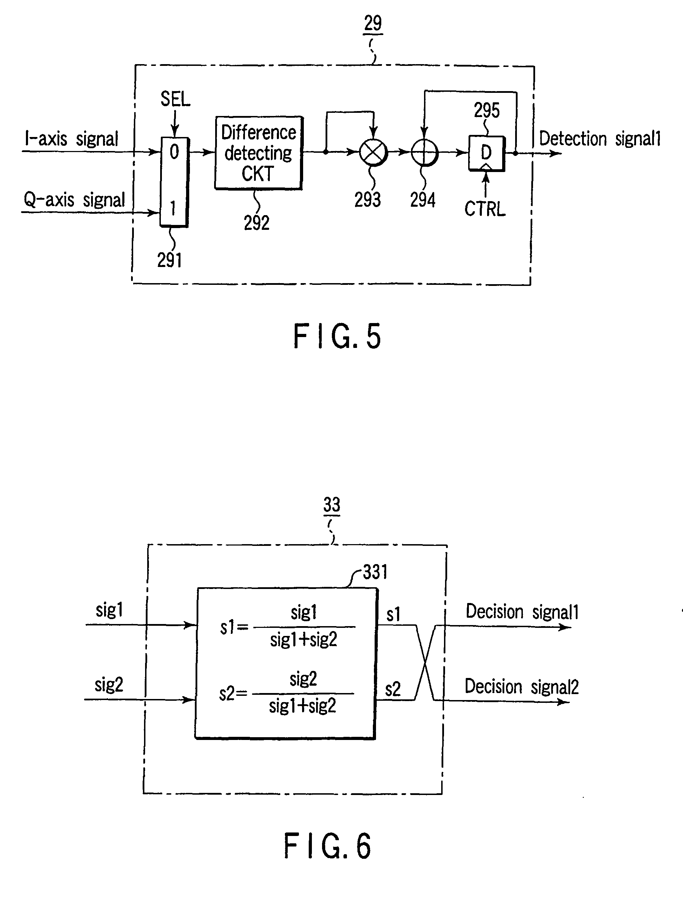

FIG. 4 is one form of the composition circuit 34. The composition circuit 34 includes multipliers 341 and 342, ratio calculating section 343, multipliers 344 and 345 and adder 346. The decision signal Iv1 from the decision circuit 33 is supplied to the multiplier 341 and the signal power pw1 from the power detection circuit 30 is supplied to the multiplier 341. Further, the decision signal Iv2 from the decision circuit 33 is supplied to the multiplier 342 and the signal power pw2 from the power detection circuit 32 is supplied to the multiplier 342. The respective multipliers 341 and 342 add weights, by the decision signals Iv1 and Iv2, to the signal powers pw1 and pw2 supplied from the power detection circuits 30 and 32. If the reception quality is deteriorated by the weight addition, the signal power value becomes smaller.

The signal powers pw1' and pw2' weighted by the multipliers 341 and 342 are supplied to a ratio calculating section 343 where proportion values f1 and f2 given below are calculated based on the signal power values pw1' and pw2' thus weighted.

$$f1 = pw1'/(pw1' + pw2')$$

$$f2 = pw2'/(pw1' + pw2')$$

The proportion value f1 is supplied to one input terminal of the multiplier 344 and the proportion value f2 is supplied to one input terminal of the multiplier 345. A data signal D1 from the equalization circuit 27 in the demodulation module DMM1 is supplied to the other input terminal of the multiplier 344 and a data signal D2 from the equalization circuit 28 in the demodulation module DMM2 is supplied to the other input terminal of the multiplier 345. In the multipliers 344 and 345, the respective data signals D1, D2 are weighted by the proportion values f1 and f2.

The output signals of the multipliers 344 and 345 are supplied to the adder 346 where these signals are added together. A data signal from the respective demodulation modules is composed in a series of processing. A resultant composite signal is supplied to an error correction circuit 35.

In FIG. 3, the decision signals Iv1 and Iv2 from the decision circuit 33 are provided as reception level signals 1 and 2 to the user.

FIG. 5 shows one form of the S/N detection circuit 29. The S/N detection circuit 31 has the same arrangement as that of the S/N detection circuit 29 and any further explanation of it is, therefore, omitted.

The S/N detection circuit 29 comprises a multiplexer 291, a difference detection circuit 292, a multiplier 293, an addition circuit 294 and a register 295. The multiplexer 291 selects either an I axis signal or a Q-axis signal from the equalization circuits 27 in accordance with a select signal SEL. The output signal of the multiplexer 291 is supplied to the difference detection circuit 292. The difference detection circuit 292 detects a difference from a reference mapping position nearest to an input signal to the input signal. A signal detected by the difference detection circuit 292 is supplied to the multiplier 293 where it is squared. The output signal of the multiplier 293 is sequentially supplied to the addition circuit 294 and then to the register 295 and, by doing so, a cumulative add value is detected by the addition circuit 294 and register 295. Therefore, the squared sum of the differences is retained in the register 295. It is to be noted that the register 295 is initialized (cleared) by a control signal CTRL at a starting time point of an OFDM symbol and a write-in operation is controlled. The control signal CTRL has its timing set in such a way as to calculate a cumulative add value only with respect to a signal (for example, a pilot signal) in a defined position of an OFDM signal.

In an ideal transmission path, the reference mapping positions of the I axis signal and Q axis signal outputted from the equalization circuit 27 are made equal.

Thus, the difference from the reference mapping position becomes "0" and the cumulative add value retained in the register 295 also becomes "0". However, a signal in a practical transmission path contains various kinds of interference signal components such as noise, multipath and fading and, for this reason, the cumulative add value necessarily never becomes "0", that is, it becomes other than "0". The cumulative add value is considered proportional to the noise level in the signal as well as the magnitudes of various kinds of interference signal components. It is, therefore, possible to evaluate the reception quality by the magnitudes of these numerical values. The cumulative add value is supplied as a detection signal sig1 to the decision circuit 33. In the same way, a detection signal sig2 is supplied from the S/N detection circuit 31 to the decision circuit 33.

FIG. 6 shows one practical form of the decision circuit 33. This decision circuit 33 has a proportion calculation section 331. The detection signals sig1 and sig2 are supplied from the S/N detection circuits 31 and 32 to the proportion calculation section 331 where proportion values s1 and s2 given below are calculated based on the detection signals sig1 and sig2.

$$s1 = sig1/(sig1 + sig2)$$

$$s2 = sig2/(sig1 + sig2)$$

As set out above, the detection signals sig1 and sig2 are such that, the smaller the bottom value, the better the reception quality of the demodulation module. On the other hand, the decision signals Iv1 and Iv2 outputted from the decision circuit 33 are used to weight the signal power. For this reason, the better the reception quality, the greater the value it is necessary to reveal. Thus as a decision signal use is made of a result of calculating the proportion value in the other demodulation module. That is, a result of calculating the proportion value s2 is used as the decision signal 1 and a result of calculating the proportion value s1 as the decision signal 2.

The decision signals Iv1 and Iv2 of the decision circuit 33 in the demodulation modules are supplied to the composition circuit 34 and used to weight the pilot signal powers. That is, if the reception quality is equal in the respective demodulation modules, the pilot powers are weighted at the same ratio and, if the reception quality is deteriorated, the weight is so added as to set the pilot power to be smaller in accordance with the ratio of the reception quality. By doing so, any adverse effect resulting from the deteriorated reception quality in the corresponding demodulation module can be eliminated in the subsequent stage of processing and it is possible to perform a correct diversity operation. That is, in the ratio of the weighted pilot signal powers, the value of a better reception quality module becomes dominant. As a result, in the weight addition to the output signals of the equalization circuits 27 and 28, the data of the better reception quality module becomes dominant.

According to the first embodiment, the S/N detection circuits 29, 31 and decision circuit 33 are provided to detect the quality of the received signal in the respective demodulation modules DMM1 and DMM2 and, by deciding the output signals of the S/N detection circuits 29, 31 by means of the decision circuit 33, the reception qualities of the demodulation modules DMM1 and DMM2 are determined and the weight is added by the decision circuit 34 to the received signal in accordance with a result of decision. It is, therefore, possible to eliminate any adverse effect resulting from a deteriorated quality demodulation module and, thereby, perform a correct diversity operation.

Further, the decision signals Iv1 and Iv2 are provided as reception level signals 1 and 2 to the user. By doing so, it is possible for the user to recognize any deteriorated reception quality demodulation branch system (demodulation module) and it is, therefore, possible to readily perform a reception quality improving operation in branched units by, for example, adjusting the antenna in the branched unit.

(Second Embodiment)

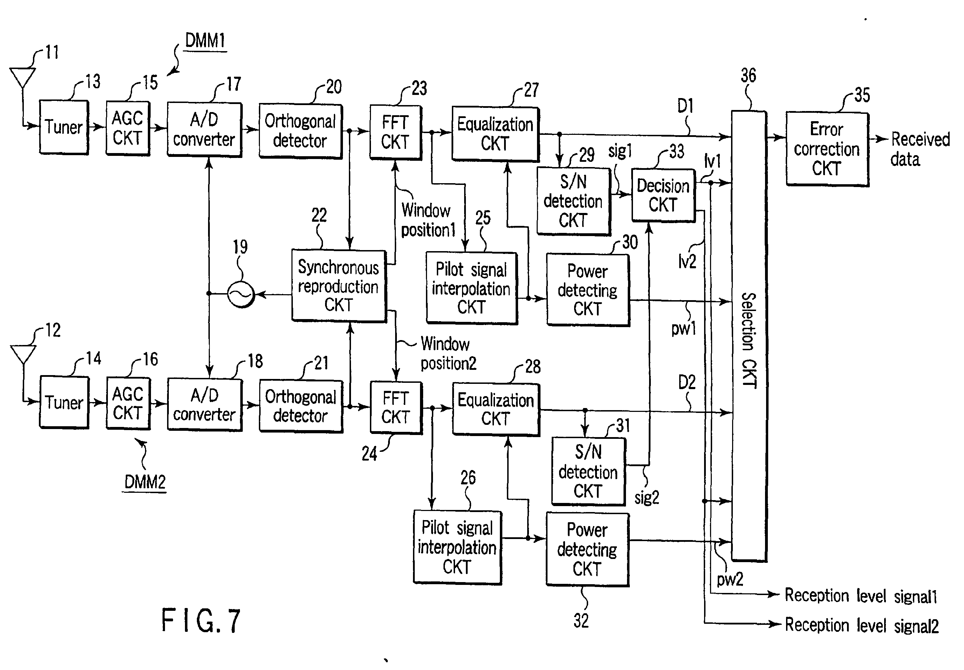

An explanation will be made below about the second embodiment of the present embodiment. In FIG. 7, the same reference numerals are employed to designate parts or elements corresponding to those shown in FIG. 3 and an explanation is restricted to those different portions only.

In the second embodiment, a selection circuit 36 as an output circuit shown in FIG. 7 is provided in place of the composition circuit 34 shown in FIG. 3. This selection circuit 36 adds weights to signal powers pw1 and pw2 from power detection circuits 30 and 32 by decision signals Iv1 and Iv2 supplied from a decision circuit 33. The selection circuit selects, from data signals D1 and D2 outputted from equalization circuits 27 and 28, one having a greater pilot power by the weighted signal power and delivers it as an output.

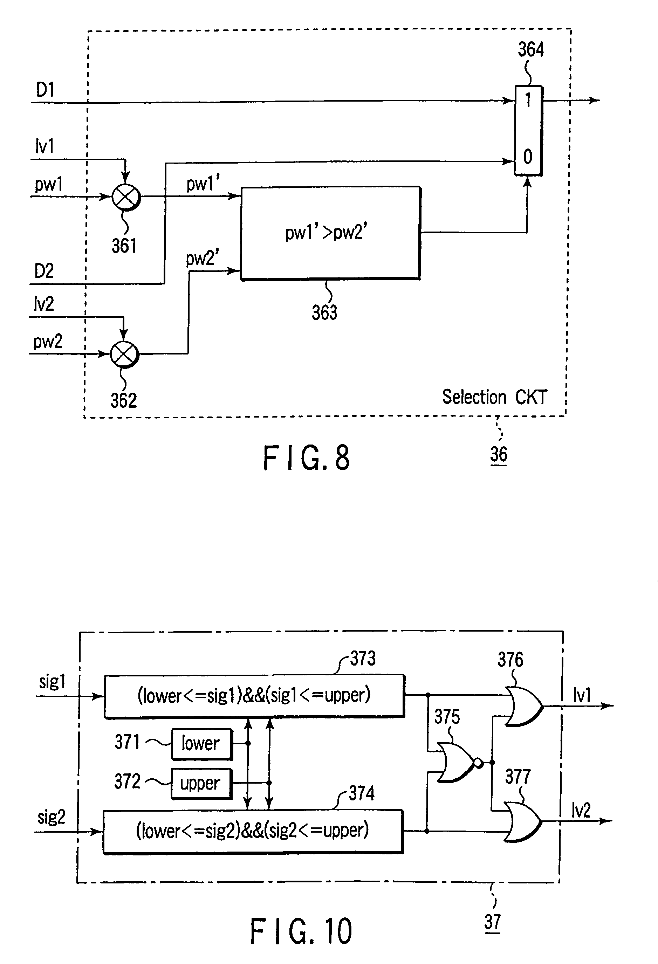

FIG. 8 shows one practical form of the selection circuit 36. The selection circuit 36 comprises multipliers 361, 362, a comparator 363 and multiplier 364. The decision signal Iv1 from the decision circuit 33 and signal power pw1 from the power detection circuit 30 are supplied to the multiplier 361. The decision signal Iv2 from the decision circuit 33 and signal power pw2 from the power detection circuit 32 are supplied to the multiplier 362. The multipliers 361 and 362 add weights by the decision signals Iv1 and Iv2 to the signal powers pw1 and pw2 supplied from the power detection circuits 30 and 32, respectively. If, by doing so, the reception quality is equal in the respective demodulation module, the pilot power is weighted at the same ratio. If, on the other hand, the reception quality is deteriorated, the weight is added to set the pilot power lower, in accordance with the reception quality ratio.

The weighted signal powers pw1' and pw2' outputted from the multipliers 361 and 362 are supplied to the comparator 363 where a comparison is made between the magnitudes of these weighted signal powers. The output signal of the comparator 363 is supplied to the multiplexer 364. The data signals D1 and D2 from the equalization circuits 27 and 28 are supplied to the input terminals of the multiplexer 364 where one of the data signals D1 and D2 is selected by an output signal of the comparator 363. That is, the multiplexer 364 selects the greater pilot signal powers in accordance with the output signal of the comparator 363. That is, the multiplexer 364 can positively select a demodulation module of a better reception quality.

According to the second embodiment above, the S/N detection circuits 29 and 31 are provided to detect the quality of the received signal in the respective demodulation modules DMM1 and DMM2 and the reception quality in the demodulation modules DDM1 and DDM2 is decided by the output signals of these S/N detection circuits 29 and 31. The selection circuit 36 adds the weight to the received signal by a result of decision and selects the greater pilot signal power, by the weighted signal power, from the data signals outputted from the equalization circuits 27 and 28 and delivers it as an output. It is, therefore, possible to eliminate any adverse effect resulting from the demodulation module of a deteriorated reception quality and to perform a correct diversity operation.

(Third Embodiment)

An explanation will be made below about the third embodiment of the present invention.

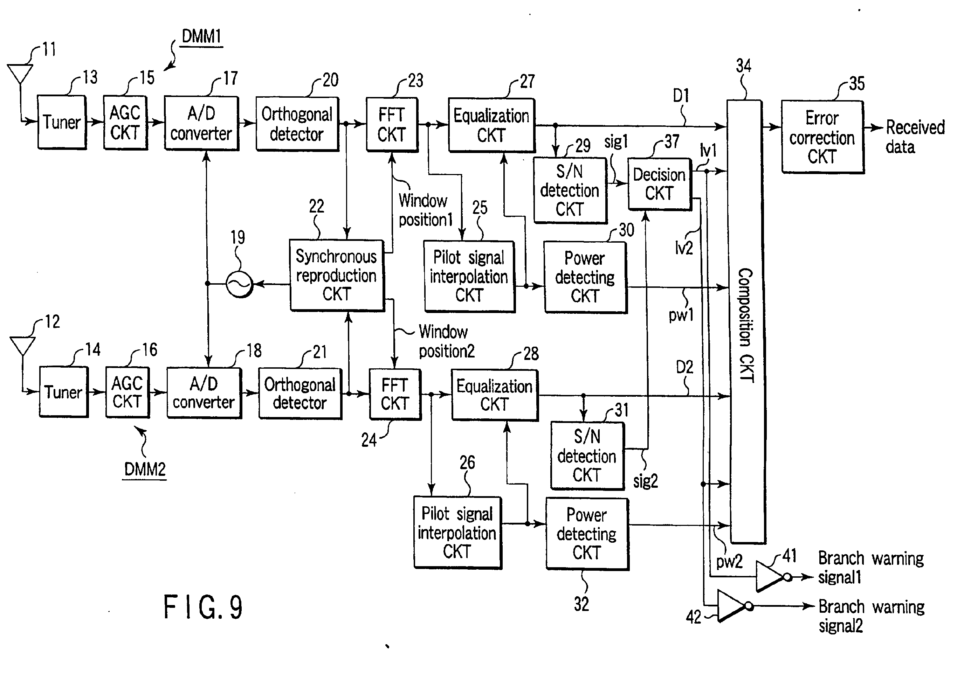

FIG. 9 shows a third embodiment of the present invention. In FIG. 9, the same reference numerals are employed to designate parts or elements corresponding to those shown in FIG. 3 and an explanation will be made below about different portions only.

A decision circuit 37 shown in the third embodiment is different from the decision circuit 33 of the first embodiment in terms of their internal arrangement. Further, the input terminals of inverter circuits 41 and 42 are connected to the output terminals of the decision circuit 37, respectively. A branch warning signal 1 is outputted from the output terminal of the inverter circuit 41 and a branch warning signal 2 is outputted from the output terminal of the inverter 42.

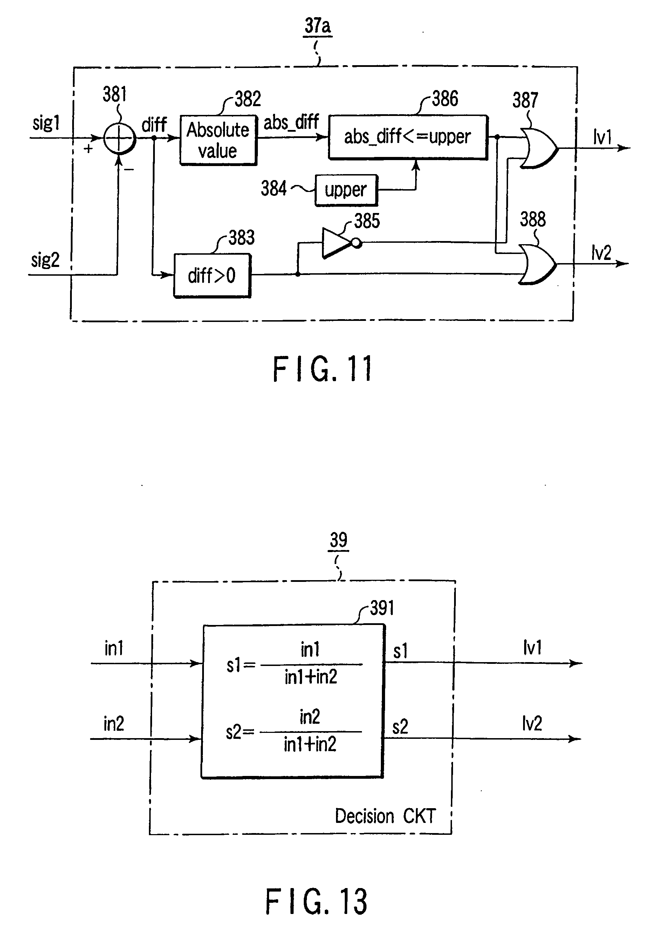

FIG. 10 shows an example of the decision circuit 37. This decision circuit 37 comprises registers 371, 372, comparators 373, 374, a NOR circuit 375, and OR circuits 376, 377. The registers 371 and 372 retain an upper limit value and lower limit value of a detection signal. These upper and lower limit values can be properly set externally.

The comparators 373 and 374 make a comparison as to whether the detection signals 1 and 2 fall within the lower limit value and upper limit value. That is, the comparator 373 compares a detection signal sig1 which is supplied from the S/N detection circuit 29 to the upper and lower limit values from the registers 371 and 372. The comparator 374 compares a detection signal sig2 which is supplied from the S/N detection circuit 31 to the lower and upper limit values which are supplied from the registers 371 and 372. The comparators 373 and 374 output a signal "1" when the detection signal sig1 or sig2 falls within a range between the lower limit value and the upper limit value and output a signal "0" when the detection signal 1 or 2 fall outside the range between the lower limit value and the upper limit value.

The output signals of the comparators 373 and 374 are supplied to the input terminals of the NOR circuit 375 and to the corresponding input terminals of OR circuits 376 and 377. The output of the NOR circuit 375 is connected to the remaining corresponding input terminals of the OR circuits 376 and 377. Decision signals Iv1 and Iv2 are outputted from the output terminals of the OR circuits 376 and 377, respectively.

Here, if the output signals of the comparators 373 and 374 are both "0", both the decision signals Iv1 and Iv2 are caused to be set to "1" by the NOR circuit 375 and OR circuits 376 and 377.

As set out above, the decision signals Iv1 and Iv2 of the demodulation modules which are outputted from the decision circuit 37 are supplied to a composition circuit 34 and used for the weight addition calculation of the pilot signal powers pw1 and pw2 outputted from power detection circuits 30 and 32. That is, if the reception quality in the respective demodulation module falls within a set value, the pilot signal power value itself is supplied by the weight addition calculation to a subsequent stage of processing. If, on the other hand, the reception quality falls outside the set value, then the pilot signal power value is supplied by the weight addition calculation as "0" to a subsequent stage of processing. By doing so, an adverse effect resulting from the demodulation module of a deteriorated reception quality can be eliminated in the subsequent stage of processing and it is possible to perform a correct diversity operation.

That is, the calculation of a proportion value by the weighted pilot signal power is only made in the module of the better reception quality. As a result, the weight addition to the data signals D1, D2 from the equalization circuits 27, 28 is made only to the data signal in the module of the better reception quality.

According to the third embodiment, the S/N detection circuits 29, 31 are provided for detecting the quality of a received signal in the respective demodulation modules DMM1, DMM2. The decision circuit 37 decides whether the output signals of the S/N detection circuits 29, 31 fall within or outside of a set value range and delivers binary signals as decision signals Iv1, Iv2. Upon receipt of the decision signals Iv1, Iv2 as binary values from the decision circuit 37 the composition circuit 34 allows a weight addition to be made to a better quality reception signal in the demodulation modules DMM1, DMM2. It is therefore, possible to eliminate any adverse effect resulting from the demodulation module of a deteriorated reception quality and to perform a correct diversity operation.

Further, the decision signals Iv1, Iv2 outputted as binary signals from the decision circuit 37 are delivered as branch warning signals 1, 2 through the inverters 41, 42. For this reason, it is possible for the user to recognize the demodulation module of a deteriorated reception quality with the use of the branch warning signals 1, 2. It is possible to perform a reception quality improving operation by adjusting an antenna, etc., in the modules.

(Fourth Embodiment)

An explanation will be made below about the fourth embodiment of the present invention. FIG. 11 shows the fourth embodiment and a variant of the decision circuit 37 shown in FIGS. 9 and 10.

In FIG. 11, a decision circuit 37a comprises a substractor 381, an absolute value circuit 382, a comparator 383, a register 384, an inverter circuit 385, a comparator 386, and OR circuits 387, 388. The substractor 381 calculates a difference value between the detection signals sig1 and sig2 supplied from the S/N detection circuits 29 and 31. The difference value (diff) is supplied to the absolute circuit 382 and comparator 383. The absolute circuit 382 calculates an absolute value (abs-diff) of the difference value and a result of calculation is supplied to the comparator 386. The comparator 386 decides whether or not the absolute value of the difference value is below an upper value (upper) retained in the register 384. In this connection it is to be noted that the upper value retained in the register 384 can be arbitrarily set from an outside. If the absolute value of the difference value is below the upper value, the comparator 386 delivers a "1" signal as being no significant difference in the reception quality of the demodulation modules and sets decision signals Iv1, Iv2 so as to allow both the demodulation modules to be set active.

On the other hand, the comparator 383 decides whether the difference value (diff) is positive or not and delivers a "1" signal when the difference value (diff) is positive and a "0" signal when the difference value (diff) is negative.

If the absolute value of the difference value exceeds the upper value, as a result of comparison by the comparator, a signal outputted from the comparator 386 is set to "0". For this reason, the decision signals Iv1, Iv2 outputted from the OR circuits 387, 388 are set depending upon the output signals of the comparator 383 and inverter circuit 385 and it is possible to set the demodulation module of a smaller detection signal value only effective.

As set out above, the first and second decision signals Iv1 and Iv2 of the demodulation modules which are outputted from the decision circuit 37a are supplied to the composition circuit 34 and used for the weight addition to the pilot signal powers outputted from the power detection circuits 30, 32. That is, if there is no significant difference in reception quality in the respective demodulation modules, a corresponding pilot signal power value itself is fed to a subsequent stage of processing. If, on the other hand, there is a significant difference, a corresponding pilot signal power value in the demodulation module of a deteriorated reception quality is fed as "0" to the subsequent stage of processing. Any adverse effect resulting from the demodulation module of a deteriorated reception quality can be eliminated in the subsequent stage and it is possible to perform a correct diversity operation.

That is, the proportion value based on the weighted pilot signal power is calculated in the module of a better reception quality only. As a result, the weight addition to the data signals D1, D2 outputted from the equalization circuit 27, 28 is performed relative to the data signal in the better reception quality module only.

According to the fourth embodiment, it is possible to obtain the same advantage as that of the second embodiment.

(Fifth Embodiment)

The fifth embodiment (however not falling within the scope of the present invention) of the present application will be described below.

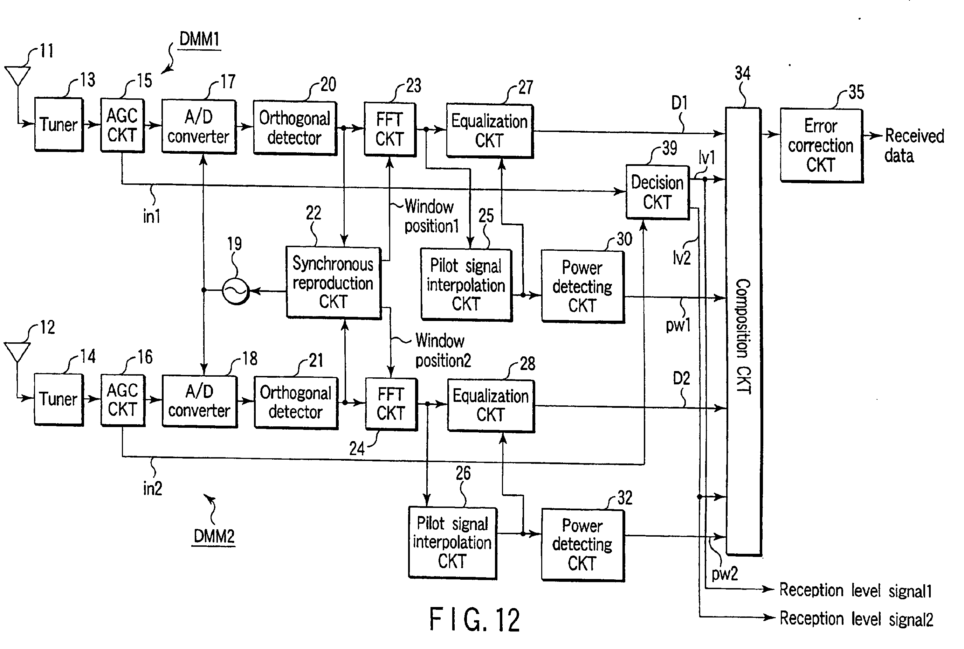

FIG. 12 shows a fifth embodiment of the present application. In FIG. 12, the same reference numerals are employed to designate parts or elements corresponding to those shown in FIG. 3 and an explanation will be made only about the different portions.

The decision circuit 33 shown in FIG. 3 is replaced by a decision circuit 39 in FIG. 12. That is, input signal levels 1 and 2 coming from AGC circuits 15, 16 are supplied to the decision circuit 39 in FIG. 12. The decision signals Iv1, Iv2 from the decision circuit 39, together with signal powers from power detection circuits 30, 32 and output signals from equalization circuits 27, 28 are supplied to a composition circuit 34.

In FIG. 12, input signal levels in1, in2 from the AGC circuits 15, 16 mean the field intensities of input signals fed from antennas 11, 12. In general, the greater the field intensity the greater the input levels in1, in2. And the reception state becomes better. In the fifth embodiment, the reception states of the demodulation modules are decided using the input signal levels in1, in2.

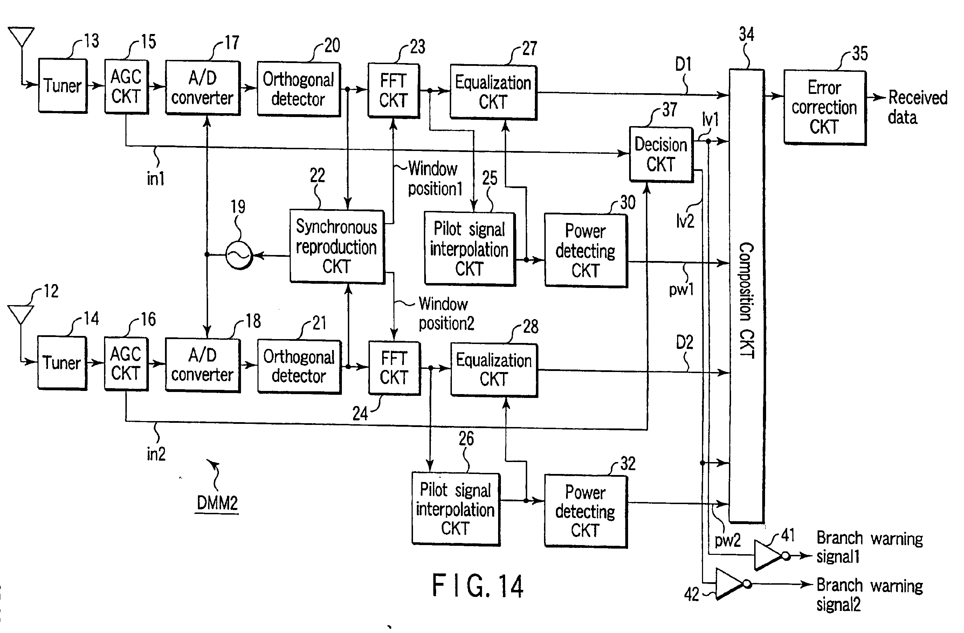

FIG. 13 shows one practical form of the decision circuit 39. This decision circuit 39 has a proportion calculation section 391. Input signal levels in1, in2 coming from the AGC circuits 15, 16 are supplied to the proportion calculation section 391 where comparison values given below are calculated based on the input signals in1, in2.

$$s1 = in1/(in1 + in2)$$

$$s2 = in2/(in1 + in2)$$

As set above, it is shown that the greater the input signal levels in1, in2, the better the reception quality in the demodulation module. Further, the decision signals Iv1, Iv2 from the decision circuit 39 are used to add the weights to the signal powers in the subsequent stage of processing. For this reason, as the reception quality becomes better, it is necessary to reveal the greater value. Therefore, the results s1, s2 of calculating the proportion values of the input signal levels in1, in2 are used directly as the decision signals Iv1, Iv2.

According to the fifth embodiment above, the decision circuit 39 decides the reception qualities of the demodulation modules DMM1, DMM2 by the input signal levels in1, in2 of these demodulation modules and the composition circuit 34 adds weights to data signals D1, D2 coming from equalization circuits 27, 38 in accordance with the decision signals Iv1, Iv2 supplied from the decision circuit 39. It is, therefore, possible to eliminate any adverse effect resulting from the demodulation module of a deteriorated reception quality and to perform a correct diversity operation.

(Sixth Embodiment)

An explanation will be made below about the sixth embodiment (however not falling within the scope of the present invention) of the present application.

FIG. 14 shows the sixth embodiment of the present application. In FIG. 14, the same reference numerals are employed to designate parts or elements corresponding to those shown in FIGS. 9 and 10 and an explanation will be made below about different portions only.

The sixth embodiment is different from the third embodiment in the following respects.

In FIGS. 9 and 10, the detection signals sig1, sig2 outputted from the S/N detection circuits 29, 31 are supplied to the decision circuit 37, while, in FIG. 14, input signal levels in1 and in2 outputted from AGC circuits 15 and 16 are supplied to a decision circuit 37. That is, the input signal levels in1, in2 from the AGC circuits 15, 16 are supplied to the input terminals of the comparators 373, 374 shown in FIG. 10.

In FIG. 14, the input signal levels in1, in2 from the AGC circuits 15, 16 are the field intensities of input signals supplied from antennas 11, 12. Generally, the greater the field intensity the better the reception state. That is, in the sixth embodiment, the reception state in the demodulation modules is decided by the input signal level.

As set out above, decision signals Iv1, Iv2 in the demodulation modules outputted from the decision circuit 37 are supplied to a composition circuit 34. Power detection circuits 30, 32 add weights to pilot signal powers outputted therefrom in accordance with the decision signals Iv1, Iv2. The decision signals Iv1, Iv2 are comprised of binary signals "0", "1". For this reason, the multipliers 341, 342 in the composition circuit shown in FIG. 4 supply a pilot signal power value per se to a subsequent stage of processing if the reception quality in the respective demodulation module falls within a set value and supply a pilot signal power value as "0" to a subsequent stage of processing if the reception quality in the demodulation modules falls outside the set value. Any adverse effect resulting from the demodulation module of a deteriorated reception quality can be eliminated and it is therefore possible to perform a correct diversity operation.

According to the sixth embodiment above, the decision circuit 37 decides the reception quality in the demodulation modules DMM1, DMM2 based on the input signal levels in1, in2 supplied from the AGC circuits 15, 16 of the demodulation modules DMM1, DMM2 and outputs the decision signals Iv1, Iv2. For this reason, the weight addition calculation can be performed by only a received signal of a better quality in accordance with the decision signals Iv1, Iv2. Therefore, any adverse effect resulting from a demodulation module of a deteriorated reception quality can be eliminated and it is therefore possible to perform a correct diversity operation.

(Seventh Embodiment)

An explanation will be made below about the seventh embodiment (however not falling within the scope of the present invention) of the present application.

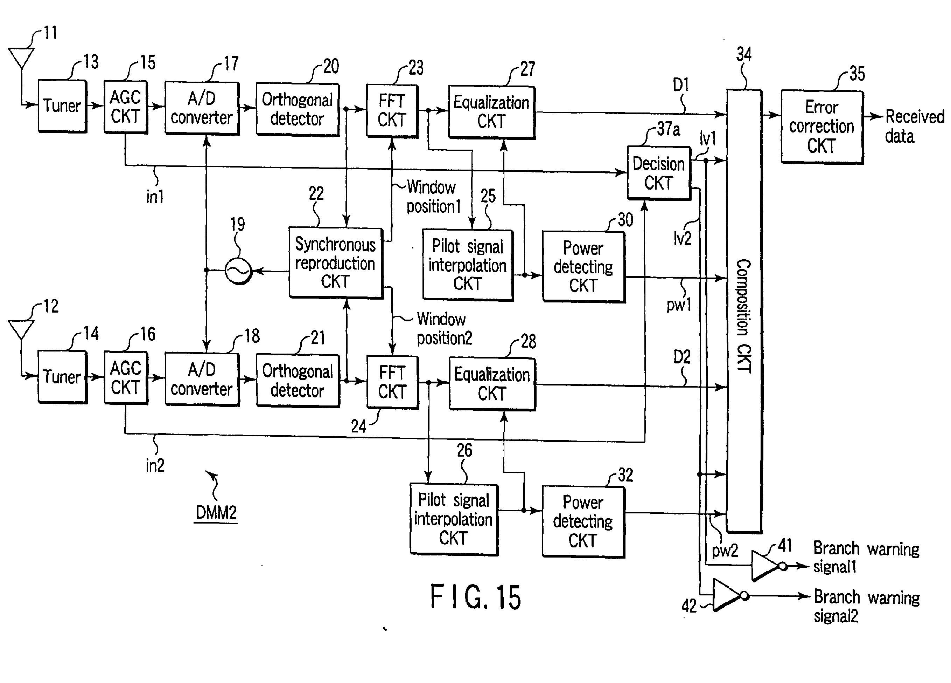

FIG. 15 shows the seventh embodiment constituting a variant of the sixth embodiment. In FIG. 15, the same reference numerals are employed to designate parts or elements corresponding to those shown in FIG. 14 and an explanation will be made below about the different portions.

In FIG. 15, the decision circuit 37 shown in FIG. 14 is replaced by a decision circuit 37a. This decision circuit 37a has the same arrangement as that of the decision circuit 37a shown in FIG. 11 except that different input signals are used.

That is, input signal levels in1, in2 coming from AGC circuits 15, 16 are supplied to the input terminals of the decision circuit 37a shown in FIG. 15, that is, to a subtractor 381 shown in FIG. 11. Therefore, the subtractor 381 calculates a difference between these input signal levels in1, in2 and the decision circuit 37a decides a reception quality in demodulation modules DMM1, DMM2 based on the input signal levels in1, in2.

The decision signals Iv1, Iv2 outputted from the decision circuit 37a are supplied to a composition circuit 34 and used to add weights to pilot signal powers outputted from the power detection circuits 30, 32. The pilot signal power values per se are supplied to a subsequent

stage of processing if there is no significant difference in reception quality in the respective demodulation modules. If, on the other hand, there is any significant difference, the pilot signal power value in the demodulation module of a deteriorated reception quality is sent as "0" in a subsequent stage of processing. By doing so, any adverse effect resulting from the demodulation module of a deteriorated reception quality can be eliminated in the subsequent stage of processing and it is therefore possible to perform a correct diversity operation.

**[0082]** According to the seventh embodiment, the reception quality in the demodulation modules DMM1, DMM2 is determined by the decision circuit 37a based on the input signal levels of the demodulation modules DMM1, DMM2. For this reason, the weight addition calculation can be done only on the received signal of a better quality based on the decision signals Iv1, Iv2 supplied from the decision circuit 37a. Therefore, any adverse effect resulting from the demodulation module of a deteriorated reception quality can be eliminated and it is therefore possible to perform a correct diversity operation.

**[0083]** Although, in the first to seventh embodiments, the demodulation modules have been explained as being of a two-system type, it is possible to adopt a three or more system type.

## Claims

**1.** An OFDM receiver unit comprising:

a first demodulation module (DMM1) configured to receive an OFDM signal and demodulate data from the OFDM signal, an output signal thereof being controlled to a given level by a first automatic gain control circuit (15);
a second demodulation module (DMM2) configured to receive the OFDM signal and demodulate data from the OFDM signal, an output signal thereof being controlled to a given level by a second automatic gain control circuit (16);
**characterized by**
a first power detection circuit (30) configured to detect the power of the pilot signal demodulated by the first demodulating module;
a second power detection circuit (32) configured to detect the power of the pilot signal demodulated by the second demodulation module;
a first detection circuit (29) configured to detect a quality of the data demodulation by the first demodulating module;
a second detection circuit (31) configured to detect a quality of the data demodulated by the second demodulation module;
a decision circuit (33) configured to decide the qualities of received signals based on detection signals supplied from the first and second detection circuits; and
an output circuit (34) supplied with the data from the first and second demodulation modules and detection signals supplied from the first and second power detection circuits and decided qualities from the decision circuit, wherein the output circuit (34) weights the detection signals supplied from the first and second power detection circuits based on the decided qualities supplied from the decision circuit, and the output circuit (34) being configured to output the data supplied from the first and second demodulation modules based on the weighted detection signals.

**2.** An OFDM receiver unit according to claim 1, **characterized in that** the first demodulation module (DDM1) comprises:

a first Fourier transformation circuit (23) configured to demodulate data of each subcarrier of the OFDM signal,
a first pilot signal interpolation circuit (25) configured to interpolate a pilot signal contained in a signal which is supplied from the first Fourier transformation circuit (23); and
a first equalization circuit (27) configured to generate a first subcarrier signal in accordance with the signal from the first Fourier transformation circuit (23) and pilot signal supplied from the first pilot signal interpolation circuit (25),
wherein the first power detection circuit (30) configured to detect the power of the first pilot signal supplied from the first pilot signal interpolation circuit (25),
the second demodulation module (DMM2) comprises:

a second Fourier transformation circuit (24) configured to demodulate data in each subcarrier of the OFDM signal;
a second pilot signal interpolation circuit (26) configured to interpolate a pilot signal contained in a signal supplied from the second Fourier transformation circuit (24); and
a second equalization circuit (28) configured to generate a third subcarrier signal in accordance with the signal supplied from the second Fourier transformation circuit (24) and pilot signal supplied from the second pilot signal interpolation circuit (26),

wherein the second power detection circuit (32) configured to detect the power of a second pilot signal supplied from the second pilot signal interpolation circuit (26).

**3.** An OFDM receiver unit according to claim 1, **characterized in that** the decision circuit (33) has

a proportion calculation section (331) supplied with first and second detection signals (sig1, sig2) outputted from the first and second detection circuits (29, 31), the ratio calculation section (331) being configured to make proportion calculation on the first and second detection signals and generate a first decision signal (s1) corresponding to the second detection signal and a second decision signal (s2) corresponding to the first detection signal and output the first decision signal in a way to correspond to the first demodulation module (DMM1) and the second decision signal in a way to correspond to the second demodulation module (DMM2).

4. An OFDM receiver unit according to claim 2, **characterized in that** the first detection circuit (29) is configured to detect a signal to noise ratio of a subcarrier signal outputted from the first equalization circuit (27) and the second detection circuit (31) is configured to detect a signal to noise ratio of a subcarrier signal outputted from the second equalization circuit (28).

5. An OFDM receiver unit according to claim 4, **characterized in that** the first and second detection circuits (29, 31) each include a difference detection circuit (292) configured to detect a difference from a reference mapping position to an input signal and an adder (294, 295) configured to cumulatively add an output signal of the difference detection circuit.

6. An OFDM receiver unit according to claim 2, **characterized in that** the output circuit (34) comprises:

a first weight addition circuit (341) supplied with the detection signal (pw1) of the first power detection circuit (30) and first decision signal (lv1) outputted from the decision circuit (33), the first weight addition circuit (341) being configured to add a weight to the detection signal (pw1) of the first power detection circuit (30) in accordance with the first decision signal (lv1); a second weight addition circuit (342) supplied with detection signal of a second power detection circuit (32) and second decision signal (lv2) outputted from the decision circuit (33), the second weight addition circuit (32) being configured to add a weight to the detection signal of the second power detection circuit (32) in accordance with the second decision signal (lv2); a proportion calculation section (343) supplied with an output signal of the first and second weight addition circuits (341, 342), the proportion calculation section (343) being configured to perform a proportion calculation based on the output signals of the first and second weight addition circuits (341, 342) to generate first and second weight signals (f1, f2); a third weight addition circuit (344) supplied with an output signal (D1) of the first equalization circuit (27) and first weight signal (f1) outputted from the proportion calculation section (343), the third weight addition circuit (344) being configured to add a weight to the output signal (D1) of the first equalization circuit (27) in accordance with the first weight signal (f1); a fourth weight addition circuit (345) supplied with an output signal (D2) of the second equalization circuit (28) and second weight signal (f2) outputted from the proportion calculating section (343), the fourth weight addition circuit (345) being configured to add a weight to the output signal of the second equalization circuit (28) in accordance with the second weight signal (f2), and an adder (346) supplied with the output signals of the third and fourth weight addition circuits (344, 345) and configured to output a composite signal.

7. An OFDM receiver unit according to claim 2, **characterized in that** the output circuit (36) comprises:

a first weight addition circuit (361) supplied with the detection signal (pw1) of the first power detection circuit (30) and first decision signal (lv1) outputted from the decision circuit (33), the first weight addition circuit (361) being configured to add a weight to the detection signal of the first power detection circuit (30) by the first decision signal (lv1); a second weight addition circuit (362) supplied with the detection signal (pw2) of the second power detection circuit (32) and a second decision signal (lv2) outputted from the decision circuit (33), the second weight addition circuit (362) being configured to add a weight signal to the detection signal (pw2) of the second power detection circuit (32) by the second decision signal (33), a comparison section (363) supplied with the output signals of the first and second weight addition circuits (361, 362) and configured to compare these output signals with each other; and a selection circuit (364) supplied with the output signals (D1, D2) of the first and second equalization circuits (27, 28) and result of comparison outputted from the comparison section (363), the selection circuit (364) being configured to select one of the output signals (D1, D2) of the first and second equalization circuits (27, 28) in accordance with a result of comparison.

8. An OFDM receiver unit according to claim 1, **characterized in that** the decision circuit (37) comprises:

a first comparator (373) supplied with the detection signal (sig1) of the first detection circuit (29) and configured to compare the detection signal (sig1) to set values (371, 372) to output a binary signal;

a second comparator (374) supplied with the detection signal (sig2) of the second detection circuit (31) and configured to compare the detection signal (sig2) to set values (371, 372) to output a binary signal;

a logic circuit (375, 376, 377) supplied with output signals of the first and second comparators (373, 374) and configured to output the first and second decision signals in accordance with the output signals of the first and second comparators (373, 374).

9.  An OFDM receiver unit according to claim 1, **characterized in that** the decision circuit (37a) comprises:

a subtractor (381) supplied with the detection signals of the first and second detection circuits (29, 31) and configured to calculate a difference between these output signals;

an absolute value circuit (382) supplied with an output signal of the subtractor (381) and configured to calculate an absolute value of this output signal;

a first comparator (386) configured to compare the absolute value outputted from the absolute value circuit (382) to a set value (384) and output a first output signal if the absolute value is greater than the set value,

a second comparator (383) for making a comparison as to whether the output signal of the subtractor (381) is negative or positive; and

a logic circuit (385, 387, 388) supplied with output signals of the first and second comparators (386, 383) and configured to output the first and second decision signals (Iv1, Iv2) in accordance with an output signal of the second comparator (383) if the first output signal is outputted from the first comparator (386).

10. An OFDM receiver unit according to claim 1, **characterized in that** the decision circuit (37) comprises:

a first comparator (373) supplied with the detection signal from the first detection circuit and configured to compare the detection signal to a set value and output a binary signal;

a second comparator (374) supplied with the detection signal from the second detection circuit and configured to compare the detection signal to a set value and output a binary signal; and

a logic circuit (375, 376, 377) supplied with output signals of the first and second comparators and configured to output the first and second decision signals (Iv1, Iv2) in accordance with the output signals of the first and second comparators (373, 374).

11. An OFDM receiver unit according to claim 1, **characterized in that** the decision circuit (37a) comprises:

a subtractor (381) supplied with detection signals from the first and second detection circuits and configured to calculate a difference therebetween;

an absolute value circuit (382) supplied with an output signal of the subtractor (381) and configured to calculate an absolute value of the output signal,

a first comparator (386) configured to compare the absolute value from the absolute value circuit (382) to a set value and deliver a first output signal if the absolute value is greater than the set value;

a second comparator (383) configured to make a comparison as to whether the output signal of the subtractor (381) is positive or negative; and

a logic circuit (385, 387, 388) supplied with output signals of the first and second comparators (386, 383) and configured to output the first and second decision signals (Iv1, Iv2) in accordance with the second comparator (383) if the first output signal is delivered from the first comparator (386).

12. An OFDM receiver unit according to each of claims 1, 7 through 11, **characterized by** further comprising an output circuit (41, 42) connected to the output terminals of the decision circuit (37, 37a) and configured to output the first and second decision signals (Iv1, Iv2)

**Patentansprüche**

1.  Eine OFDM-Empfangseinheit, umfassend:

ein erstes Demodulationsmodul (DMM1), konfiguriert zum Empfangen eines OFDM-Signals und Demodulieren von Daten von dem OFDM-Signal, wobei ein Ausgangssignal desselben gesteuert bzw. geregelt wird auf eine bestimmte Höhe durch eine erste automatische Verstärkungsregelschaltung (15);

ein zweites Demodulationsmodul (DMM2), konfiguriert zum Empfangen des OFDM-Signals und Demodulieren von Daten von dem OFDM-Signal, wobei ein Ausgangssignal desselben geregelt wird auf eine bestimmte Höhe durch eine zweite automatische Verstärkungsregelschaltung (16);

**gekennzeichnet durch**

eine erste Leistungsdetektierschaltung (30), konfiguriert zum Detektieren der Leistung des Pilot-Signals, das **durch** das erste Demodulationsmodul demoduliert wird;

eine zweite Leistungsdetektierschaltung (32), konfiguriert zum Detektieren der Leistung des Pilot-Signals , das **durch** das zweite Demodulationsmodul demoduliert wird;

eine erste Detektionsschaltung (29), konfiguriert zum Detektieren einer Qualität der Datendemodulation **durch** das erste Demodulationsmodul;

eine zweite Detektionsschaltung (31), konfiguriert zum Detektieren einer Qualität der Daten, die **durch** das zweite Demodulationsmodul demoduliert werden;

eine Entscheidungsschaltung (33), konfiguriert zum Entscheiden über die Qualitäten der empfangenen Signale, basierend auf Detektionssignalen, die von der ersten und zweiten Detektionsschaltung geliefert werden; und

eine Ausgangsschaltung (34), die mit Daten von dem ersten und zweiten Demodulationsmodul versorgt wird, und Detektionssignalen, die von der ersten und zweiten Leistungsdetektionsschaltung geliefert werden, und bestimmten Qualitäten von der Entscheidungsschaltung,

wobei die Ausgangsschaltung (34) die von der ersten und zweiten Leistungsdetektionsschaltung gelieferten Detektionssignale gewichtet, basierend auf den bestimmten Qualitäten, die von der Entscheidungsschaltung geliefert werden, und wobei die Ausgangsschaltung (34) konfiguriert ist zum Ausgeben der von dem ersten und zweiten Demodulationsmodul gelieferten Daten, basierend auf den gewichteten Detektionssignalen.

2.  Eine OFDM-Empfangseinheit nach Anspruch 1, **dadurch gekennzeichnet, dass** das erste Demodulationsmodul (DDM1) umfasst:

eine erste Fourier-Transformationsschaltung (23), konfiguriert zum Demodulieren von Daten von jedem Teilträger des OFDM-Signals,

eine erste Pilot-Signalinterpolationsschaltung (25), konfiguriert zum Interpolieren eines Pilot-Signals, das in einem Signal enthalten ist, das von der ersten Fourier-Transformationsschaltung (23) zugeführt wird; und

eine erste Entzerrungsschaltung (27), konfiguriert zum Erzeugen eines ersten Teilträgersignals gemäß dem Signal von der ersten Fourier-Transformationsschaltung (23) und einem Pilot-Signal, das von der ersten Pilot-Signalinterpolationsschaltung (25) zugeführt wird,

wobei die erste Leistungsdetektionsschaltung (30) konfiguriert ist zum Detektieren der Leistung des ersten Pilot-Signals, das von der ersten Pilot-Signalinterpolationsschaltung (25) zugeführt wird, und das zweite Demodulationsmodul (DMM2) umfasst:

eine zweite Fourier-Transformationsschaltung (24), konfiguriert zum Demodulieren von Daten in jedem Teilträger des OFDM-Signals;

eine zweite Pilot-Signalinterpolationsschaltung (26), konfiguriert zum Interpolieren eines Pilot-Signals, das in einem Signal enthalten ist, das von der zweiten Fourier-Transformationsschaltung (24) zugeführt wird; und

eine zweite Entzerrungsschaltung (28), konfiguriert zum Erzeugen eines dritten Teilträgersignals gemäß dem Signal, das von der zweiten Fourier-Transformationsschaltung (24) zugeführt wird und einem Pilot-Signal, das von der zweiten Pilot-Signalinterpolationsschaltung (26) zugeführt wird,

wobei die zweite Leistungsdetektionsschaltung (32) konfiguriert ist, zum Detektieren der Leistung eines zweiten Pilot-Signals, das von der zweiten Pilot-Signalinterpolationsschaltung (26) zugeführt wird.

3.  Eine OFDM-Empfangseinheit nach Anspruch 1, **dadurch gekennzeichnet, dass** die Entscheidungsschaltung (33) einen Proportionsberechnungsabschnitt (331) aufweist, der versorgt wird mit ersten und zweiten Detektionssignalen (sig1, sig2), die von der ersten und zweiten Detektionsschaltung (29, 31) ausgegeben werden, wobei der Verhältnisberechnungsabschnitt (331) konfiguriert ist zum Durchführen einer Proportionsberechnung an dem ersten und zweiten Detektionssignal und Erzeugen eines ersten Entscheidungssignals (s1) entsprechend zu dem zweiten Detektionssignal und einem zweiten Entscheidungssignal (s2) entsprechend zu dem ersten Detektionssignal und Ausgeben des ersten Entscheidungssignals in einer Art und Weise, dass es dem ersten Demodulationsmodul (DMM1) entspricht und des zweiten Entscheidungssignals in einer Art und Weise, dass es dem zweiten Demodulationsmodul (DMM2) entspricht.

4.  Eine OFDM-Empfangseinheit nach Anspruch 2, **dadurch gekennzeichnet, dass** die erste Detektionsschaltung (29) konfiguriert ist zum Detektieren eines Signal-zu-Rausch-Verhältnisses eines Teilträgersignals, das von der ersten Entzerrungsschaltung (27) ausgegeben wird, und die zweite Detektionsschaltung (31) konfiguriert ist zum Detektieren eines Signal-zu-Rausch-Verhältnisses eines Teilträgersignals, das von der zweiten Entzerrungsschaltung (28) ausgegeben wird.

5. Eine OFDM-Empfangseinheit nach Anspruch 4, **dadurch gekennzeichnet, dass** die erste und zweite Detektionsschaltung (29, 31) jeweils eine Unterschiedsdetektionsschaltung (292) enthalten, konfiguriert zum Detektieren eines Unterschieds von einer Referenzabbildungsposition zu einem Eingangssignal und einen Addierer (294, 295) konfiguriert ist zum kumulativen Addieren eines Ausgangssignals der Unterschiedsdetektionsschaltung.

6. Eine OFDM-Empfangseinheit nach Anspruch 2, **dadurch gekennzeichnet, dass** die Ausgangsschaltung (34) umfasst:

eine erste Gewichtungsadditionsschaltung (341), versorgt mit dem Detektionssignal (pw1) der ersten Leistungsdetektionsschaltung (30) und einem ersten Entscheidungssignal (Iv1), das von der Entscheidungsschaltung (32) ausgegeben wird, wobei die erste Gewichtungsadditionsschaltung (341) konfiguriert ist zum Addieren einer Gewichtung zu dem Detektionssignal (pw1) der ersten Leistungsdetektionsschaltung (30) gemäß dem ersten Entscheidungssignal (Iv1);

eine zweite Gewichtungsadditionsschaltung (342), versorgt mit einem Detektionssignal einer zweiten Leistungsdetektionsschaltung (32) und einem zweiten Entscheidungssignal (Iv2), das von der Entscheidungsschaltung (33) ausgegeben wird, wobei die zweite Gewichtungsadditionsschaltung (32) konfiguriert ist, zum Addieren einer Gewichtung zu dem Detektionssignal der zweiten Leistungsdetektionsschaltung (32) gemäß dem zweiten Entscheidungssignal (Iv2);

einen Proportionsberechnungsabschnitt (343), versorgt mit einem Ausgangssignal der ersten und zweiten Gewichtungsadditionsschaltung (341, 342), wobei der Proportionsberechnungsabschnitt (343) konfiguriert ist zum Ausführen einer Proportionsberechnung, basierend auf den Ausgangssignalen der ersten und zweiten Gewichtungsadditionsschaltung (341, 342) zum Erzeugen von einem ersten und zweiten Gewichtungssignal (f1, f2) ;

eine dritte Gewichtungsadditionsschaltung (344), versorgt mit einem Ausgangssignal (D1) der ersten Entzerrungsschaltung (27) und einem ersten Gewichtungssignal (f1), das von dem Proportionsberechungsabschnitt (343) ausgegeben wird, wobei die dritte Gewichtungsadditionsschaltung (344) konfiguriert ist zum Addieren einer Gewichtung zu dem Ausgangssignal (D1) der ersten Entzerrungsschaltung (27) gemäß dem ersten Gewichtungssignal (f1); eine vierte Gewichtungsadditionsschaltung (345), versorgt mit einem Ausgangssignal (D2) der zweiten Entzerrungsschaltung (28) und einem zweiten Gewichtungssignal (f2), das von dem Proportionsberechnungsabschnitt (343) ausgegeben wird, wobei die vierte Gewichtungsadditionsschaltung (345) konfiguriert ist zum Addieren einer Gewichtung zu dem Ausgangssignal der zweiten Entzerrungsschaltung (28) gemäß dem zweiten Gewichtungssignal (f2), und

einen Addierer (346), versorgt mit den Ausgangssignalen der dritten und vierten Gewichtungsadditionsschaltung (344, 345) und konfiguriert zum Ausgeben eines Verbundsignals bzw. zusammengesetzten Signals.

7. Eine OFDM-Empfangseinheit nach Anspruch 2, **dadurch gekennzeichnet, dass** die Ausgangsschaltung (36) umfasst:

eine erste Gewichtungsadditionsschaltung (361), versorgt mit dem Detektionssignal (pw1) der ersten Leistungsdetektionsschaltung (30) und einem ersten Entscheidungssignal (Iv1), das von der Entscheidungsschaltung (33) ausgegeben wird, wobei die erste Gewichtungsadditionsschaltung (361) konfiguriert ist zum Addieren einer Gewichtung zu dem Detektionssignal (pw1) der ersten Leistungsdetektionsschaltung (30) durch das erste Entscheidungssignal (Iv1);

eine zweite Gewichtungsadditionsschaltung (362), versorgt mit dem Detektionssignal (pw2) der zweiten Leistungsdetektionsschaltung (32) und einem zweiten Entscheidungssignal (Iv2), das von der Entscheidungsschaltung (33) ausgegeben wird, wobei die zweite Gewichtungsadditionsschaltung (362) konfiguriert ist, zum Addieren eines Gewichtungssignals zu dem Detektionssignal (pw2) der zweiten Leistungsdetektionsschaltung (32) durch das zweite Entscheidungssignal (33);

einen Vergleichsabschnitt (363), versorgt mit den Ausgangssignalen der ersten und zweiten Gewichtungsadditionsschaltung (361, 362) und konfiguriert zum Vergleichen dieser Ausgangssignale miteinander; und

eine Auswahlschaltung (364), versorgt mit den Ausgangssignalen (D1, D2) der ersten und zweiten Verzerrungsschaltung (27, 28) und eines Ergebnisses des Vergleichs, der von dem Vergleichsabschnitt (363) ausgegeben wird, wobei die Auswahlschaltung (364) konfiguriert ist, zum Auswählen eines der Ausgangssignale (D1, D2) der ersten und zweiten Entzerrungsschaltung (27, 28) gemäß einem Ergebnis des

**8.** Eine OFDM-Empfangseinheit nach Anspruch 1, **dadurch gekennzeichnet, dass**
die Entscheidungsschaltung (37) umfasst:

einen ersten Vergleicher (373), versorgt mit dem Detektionssignal (sig1) der ersten Detektionsschaltung (29) und konfiguriert zum Vergleichen des Detektionssignals (sig1), um Werte (371, 372) zu setzen, um ein binäres Signal auszugeben;
einen zweiten Vergleicher (374), versorgt mit dem Detektionssignal (sig2) der zweiten Detektionsschaltung (31) und konfiguriert zum Vergleichen des Detektionssignals (sig2), um Werte (371, 372) zu setzen, um ein binäres Signal auszugeben;
eine Logikschaltung (375, 376, 377), versorgt mit den Ausgangssignalen des ersten und zweiten Vergleichers (373, 374) und konfiguriert zum Ausgeben des ersten und zweiten Entscheidungssignals gemäß der Ausgangssignale des ersten und zweiten Vergleichers (373, 374).

**9.** Eine OFDM-Empfangseinheit nach Anspruch 1, **dadurch gekennzeichnet, dass**
die Entscheidungsschaltung (37a) umfasst:

einen Subtrahierer (381), versorgt mit den Detektionssignalen der ersten und zweiten Detektionsschaltung (29, 31) und konfiguriert zum Berechnen eines Unterschieds zwischen diesen Ausgangssignalen;
eine Absolut-Wert-Schaltung (382), versorgt mit einem Ausgangssignal des Subtrahierers (381) und konfiguriert zum Berechnen eines absoluten Werts dieses Ausgangssignals;
einen ersten Vergleicher (386), konfiguriert zum Vergleichen des absoluten Werts, der von der Absolut-Wert-Schaltung (382) ausgegeben wird, um einen Wert (384) zu setzen und Ausgeben eines ersten Ausgangssignals, falls der absolute Wert größer ist als der gesetzte Wert,
einen zweiter Vergleicher (383) zum Durchführen eines Vergleichs, ob das Ausgangssignal des Subtrahierers (381) negativ oder positiv ist, und
eine Logikschaltung (385, 387, 388), versorgt mit Ausgangssignalen des ersten und zweiten Vergleichers (386, 383) und konfiguriert zum Ausgeben des ersten und zweiten Entscheidungssignals (Iv1, Iv2) gemäß einem Ausgangssignal des zweiten Vergleichers (383), falls das erste Ausgangssignal von dem ersten Vergleicher (386) ausgegeben wird.

**10.** Eine OFDM-Empfangseinheit nach Anspruch 1, **da-**

**durch gekennzeichnet, dass**
die Entscheidungsschaltung (37) umfasst:

einen ersten Vergleicher (373), versorgt mit dem Detektionssignal von der ersten Detektionsschaltung und konfiguriert zum Vergleichen des Detektionssignals mit einem gesetzten Wert und Ausgeben eines binären Signals;
einen zweiten Vergleicher (374), versorgt mit dem Detektionssignal von der zweiten Detektionsschaltung und konfiguriert zum Vergleichen des Detektionssignals mit einem gesetzten Wert und Ausgeben eines Binärsignals; und
eine Logikschaltung (375, 376, 377), versorgt mit Ausgangssignalen des ersten und zweiten Vergleichers und konfiguriert zum Ausgeben des ersten und zweiten Entscheidungssignals (Iv1, Iv2) gemäß der Ausgangssignale des ersten und zweiten Vergleichers (373, 374).

**11.** Eine OFDM-Empfangseinheit gemäß Anspruch 1, **dadurch gekennzeichnet, dass**
die Entscheidungsschaltung (37a) umfasst:

einen Subtrahierer (381), versorgt mit Detektionssignalen von der ersten und zweiten Detektionsschaltung und konfiguriert zum Berechnen eines Unterschieds dazwischen;
eine Absolut-Wert-Schaltung (382), versorgt mit einem Ausgangssignal des Subtrahierers (381) und
konfiguriert zum Berechnen eines absoluten Werts dieses Ausgangssignals,
einen ersten Vergleicher (386), konfiguriert zum Vergleichen des absoluten Werts, von der Absolut-Wert-Schaltung (382) mit einem gesetzten Wert und Liefern eines ersten Ausgangssignals, falls der absolute Wert größer ist als der gesetzte Wert,
einen zweiten Vergleicher (383) zum Durchführen eines Vergleichs, ob das Ausgangssignal des Subtrahierers (381) positiv oder negativ ist, und
eine Logikschaltung (385, 387, 388), versorgt mit Ausgangssignalen des ersten und zweiten Vergleichers (386, 383) und konfiguriert zum Ausgeben des ersten und zweiten Entscheidungssignals (Iv1, Iv2) gemäß dem zweiten Vergleicher (283), falls das erste Ausgangssignal von dem ersten Vergleicher (386) geliefert wird.

**12.** Eine OFDM-Empfangseinheit nach einem der Ansprüche 1, 7 bis 11, **gekennzeichnet dadurch, dass** sie ferner umfasst:

eine Ausgangsschaltung (41, 42), verbunden mit den Ausgangsanschlüssen der Entscheidungsschaltung (37, 37a) und konfiguriert zum Ausgeben des ersten und zweiten Entscheidungssignals (Iv1, Iv2).

**Revendications**

1. Unité de récepteur OFDM comprenant :

un premier module de démodulation (DMM1) qui est configuré pour recevoir un signal OFDM et pour démoduler des données à partir du signal OFDM, son signal de sortie étant commandé à un niveau donné par un premier circuit de commande automatique de gain (15) ;
un second module de démodulation (DMM2) qui est configuré pour recevoir le signal OFDM et pour démoduler des données à partir du signal OFDM, son signal de sortie étant commandé à un niveau donné par un second circuit de commande automatique de gain (16),

**caractérisée par** :

un premier circuit de détection de puissance (30) qui est configuré pour détecter la puissance du signal de pilote qui est démodulé par le premier module de démodulation ;
un second circuit de détection de puissance (32) qui est configuré pour détecter la puissance du signal de pilote qui est démodulé par le second module de démodulation ;
un premier circuit de détection (29) qui est configuré pour détecter une qualité de la démodulation de données par le premier module de démodulation ;
un second circuit de détection (31) qui est configuré pour détecter une qualité des données démodulées par le second module de démodulation ;
un circuit de décision (33) qui est configuré pour décider des qualités des signaux reçus sur la base de signaux de détection qui sont appliqués depuis les premier et second circuits de détection ; et
un circuit de sortie (34) qui reçoit en application les données en provenance des premier et second modules de démodulation et des signaux de détection qui sont appliqués depuis les premier et second circuits de détection de puissance et des qualités décidées en provenance du circuit de décision, dans lequel le circuit de sortie (34) pondère les signaux de détection qui sont appliqués depuis les premier et second circuits de détection de puissance sur la base des qualités décidées qui sont appliquées depuis le circuit de décision et le circuit de sortie (34) est configuré pour émettre en sortie les données qui sont appliquées depuis les premier et second modules de démodulation sur la base des signaux de détection pondérés.

2. Unité de récepteur OFDM selon la revendication 1, **caractérisée en ce que** :

le premier module de démodulation (DDM1) comprend :

un premier circuit de transformation de Fourier (23) qui est configuré pour démoduler des données de chaque sous-porteuse du signal OFDM ;
un premier circuit d'interpolation de signal de pilote (25) qui est configuré pour interpoler un signal de pilote qui est contenu dans un signal qui est appliqué depuis le premier circuit de transformation de Fourier (23) ; et
un premier circuit d'égalisation (27) qui est configuré pour générer un premier signal de sous-porteuse conformément au signal en provenance du premier circuit de transformation de Fourier (23) et à un signal de pilote qui est appliqué depuis le premier circuit d'interpolation de signal de pilote (25),

dans laquelle le premier circuit de détection de puissance (30) est configuré pour détecter la puissance du premier signal de pilote qui est appliqué depuis le premier circuit d'interpolation de signal de pilote (25),
le second module de démodulation (DMM2) comprend:

un second circuit de transformation de Fourier (24) qui est configuré pour démoduler des données dans chaque sous-porteuse du signal OFDM ;
un second circuit d'interpolation de signal de pilote (26) qui est configuré pour interpoler un signal de pilote qui est contenu dans un signal qui est appliqué depuis le second circuit de transformation de Fourier (24) ; et
un second circuit d'égalisation (28) qui est configuré pour générer un troisième signal de sous-porteuse conformément au signal qui est appliqué depuis le second circuit de transformation de Fourier (24) et à un signal de pilote qui est appliqué depuis le second circuit d'interpolation de signal de pilote (26),

dans laquelle le second circuit de détection de puissance (32) est configuré pour détecter la puissance d'un second signal de pilote qui est appliqué depuis le second circuit d'interpolation de signal de pilote (26).

**3.** Unité de récepteur OFDM selon la revendication 1, **caractérisée en ce que** le circuit de décision (33) comporte une section de calcul de proportion (331) qui reçoit en application des premier et second signaux de détection (sig1, sig2) qui sont émis en sortie depuis les premier et second circuits de détection (29, 31), la section de calcul de proportion (331) étant configurée pour réaliser un calcul de proportion sur les premier et second signaux de détection et pour générer un premier signal de décision (s1) qui correspond au second signal de détection et un second signal de décision (s2) qui correspond au premier signal de détection et pour émettre en sortie le premier signal de décision de telle sorte qu'il corresponde au premier module de démodulation (DMM1) et le second signal de décision de telle sorte qu'il corresponde au second module de démodulation (DMM2).

**4.** Unité de récepteur OFDM selon la revendication 2, **caractérisée en ce que** le premier circuit de détection (29) est configuré pour détecter un rapport signal sur bruit d'un signal de sous-porteuse qui est émis en sortie depuis le premier circuit d'égalisation (27) et le second circuit de détection (31) est configuré pour détecter un rapport signal sur bruit d'un signal de sous-porteuse qui est émis en sortie depuis le second circuit d'égalisation (28).

**5.** Unité de récepteur OFDM selon la revendication 4, **caractérisée en ce que** les premier et second circuits de détection (29, 31) incluent chacun un circuit de détection de différence (292) qui est configuré pour détecter une différence depuis une position de cartographie de référence jusqu'à un signal d'entrée et un additionneur (294, 295) qui est configuré pour additionner de façon cumulative un signal de sortie du circuit de détection de différence.

**6.** Unité de récepteur OFDM selon la revendication 2, **caractérisée en ce que** le circuit de sortie (34) comprend :

un premier circuit d'addition de poids (341) qui reçoit en application le signal de détection (pw1) du premier circuit de détection de puissance (30) et un premier signal de décision (lv1) qui est émis en sortie depuis le circuit de décision (33), le premier circuit d'addition de poids (341) étant configuré pour additionner un poids au signal de détection (pw1) du premier circuit de détection de puissance (30) conformément au premier signal de décision (lv1) ;

un second circuit d'addition de poids (342) qui reçoit en application un signal de détection du second circuit de détection de puissance (32) et un second signal de décision (lv2) qui est émis en sortie depuis le circuit de décision (33), le second circuit d'addition de poids (32) étant configuré pour additionner un poids au signal de détection du second circuit de détection de puissance (32) conformément au second signal de décision (lv2) ;

une section de calcul de proportion (343) qui reçoit en application un signal de sortie des premier et second circuits d'addition de poids (341, 342), la section de calcul de proportion (343) étant configurée pour réaliser un calcul de proportion sur la base des signaux de sortie des premier et second circuits d'addition de poids (341, 342) afin de générer des premier et second signaux de poids (f1, f2) ;

un troisième circuit d'addition de poids (344) qui reçoit en application un signal de sortie (D1) du premier circuit d'égalisation (27) et un premier signal de poids (f1) qui est émis en sortie depuis la section de calcul de proportion (343), le troisième circuit d'addition de poids (344) étant configuré pour additionner un poids au signal de sortie (D1) du premier circuit d'égalisation (27) conformément au premier signal de poids (f1) ;

un quatrième circuit d'addition de poids (345) qui reçoit en application un signal de sortie (D2) du second circuit d'égalisation (28) et un second signal de poids (f2) qui est émis en sortie depuis la section de calcul de proportion (343), le quatrième circuit d'addition de poids (345) étant configuré pour additionner un poids au signal de sortie du second circuit d'égalisation (28) conformément au second signal de poids (f2) ; et

un additionneur (346) qui reçoit en application les signaux de sortie des troisième et quatrième circuits d'addition de poids (344, 345) et qui est configuré pour émettre en sortie un signal composite.

**7.** Unité de récepteur OFDM selon la revendication 2, **caractérisée en ce que** le circuit de sortie (36) comprend :

un premier circuit d'addition de poids (361) qui reçoit en application le signal de détection (pw1) du premier circuit de détection de puissance (30) et un premier signal de décision (lv1) qui est émis en sortie depuis le circuit de décision (33), le premier circuit d'addition de poids (361) étant configuré pour additionner un poids au signal de détection du premier circuit de détection de puissance (30) au moyen du premier signal de décision (lv1) ;

un second circuit d'addition de poids (362) qui reçoit en application le signal de détection (pw2) du second circuit de détection de puissance (32) et un second signal de décision (lv2) qui est émis

en sortie depuis le circuit de décision (33), le second circuit d'addition de poids (362) étant configuré pour additionner un signal de poids au signal de détection (pw2) du second circuit de détection de puissance (32) au moyen du second signal de décision (lv2);

une section de comparaison (363) qui reçoit en application les signaux de sortie des premier et second circuits d'addition de poids (361, 362) et qui est configurée pour comparer ces signaux de sortie l'un à l'autre ; et

un circuit de sélection (364) qui reçoit en application les signaux de sortie (D1, D2) des premier et second circuits d'égalisation (27, 28) et un résultat de comparaison qui est émis en sortie depuis la section de comparaison (363), le circuit de sélection (364) étant configuré pour sélectionner l'un des signaux de sortie (D1, D2) des premier et second circuits d'égalisation (27, 28) conformément à un résultat de comparaison.

**8.** Unité de récepteur OFDM selon la revendication 1, **caractérisée en ce que** le circuit de décision (37) comprend :

un premier comparateur (373) qui reçoit en application le signal de détection (sig1) du premier circuit de détection (29) et qui est configuré pour comparer le signal de détection (sig1) à des valeurs établies (371, 372) pour émettre en sortie un signal binaire ;

un second comparateur (374) qui reçoit en application le signal de détection (sig2) du second circuit de détection (31) et qui est configuré pour comparer le signal de détection (sig2) à des valeurs établies (371, 372) pour émettre en sortie un signal binaire ;

un circuit logique (375, 376, 377) qui reçoit en application des signaux de sortie des premier et second comparateurs (373, 374) et qui est configuré pour émettre en sortie les premier et second signaux de décision conformément aux signaux de sortie des premier et second comparateurs (373, 374).

**9.** Unité de récepteur OFDM selon la revendication 1, **caractérisée en ce que** le circuit de décision (37a) comprend :

un soustracteur (381) qui reçoit en application les signaux de détection des premier et second circuits de détection (29, 31) et qui est configuré pour calculer une différence entre ces signaux de sortie ;

un circuit de valeur absolue (382) qui reçoit en application un signal de sortie du soustracteur (381) et qui est configuré pour calculer une valeur absolue de ce signal de sortie ;

un premier comparateur (386) qui est configuré pour comparer la valeur absolue qui est émise en sortie depuis le circuit de valeur absolue (382) à une valeur établie (384) et pour émettre en sortie un premier signal de sortie si la valeur absolue est supérieure à la valeur établie ;

un second comparateur (383) pour réaliser une comparaison de manière à déterminer si le signal de sortie du soustracteur (381) est négatif ou positif ; et

un circuit logique (385, 387, 388) qui reçoit en application des signaux de sortie des premier et second comparateurs (386, 383) et qui est configuré pour émettre en sortie les premier et second signaux de décision (lv1, lv2) conformément à un signal de sortie du second comparateur (383) si le premier signal de sortie est émis en sortie depuis le premier comparateur (386).

**10.** Unité de récepteur OFDM selon la revendication 1, **caractérisée en ce que** le circuit de décision (37) comprend :

un premier comparateur (373) qui reçoit en application le signal de détection en provenance du premier circuit de détection et qui est configuré pour comparer le signal de détection à une valeur établie et pour émettre en sortie un signal binaire ;

un second comparateur (374) qui reçoit en application le signal de détection en provenance du second circuit de détection et qui est configuré pour comparer le signal de détection à une valeur établie et pour émettre en sortie un signal binaire ; et

un circuit logique (375, 376, 377) qui reçoit en application des signaux de sortie des premier et second comparateurs et qui est configuré pour émettre en sortie les premier et second signaux de décision (lv1, lv2) conformément aux signaux de sortie des premier et second comparateurs (373, 374).

**11.** Unité de récepteur OFDM selon la revendication 1, **caractérisée en ce que** le circuit de décision (37a) comprend :

un soustracteur (381) qui reçoit en application des signaux de détection en provenance des premier et second circuits de détection et qui est configuré pour calculer une différence entre eux ;

un circuit de valeur absolue (382) qui reçoit en application un signal de sortie du soustracteur (381) et qui est configuré pour calculer une valeur absolue du signal de sortie ;

un premier comparateur (386) qui est configuré pour comparer la valeur absolue en provenance du circuit de valeur absolue (382) à une valeur établie et pour délivrer un premier signal de sortie si la valeur absolue est supérieure à la valeur établie ;

un second comparateur (383) qui est configuré pour réaliser une comparaison de manière à déterminer si le signal de sortie du soustracteur (381) est négatif ou positif ; et

un circuit logique (385, 387, 388) qui reçoit en application des signaux de sortie des premier et second comparateurs (386, 383) et qui est configuré pour émettre en sortie les premier et second signaux de décision (Iv1, Iv2) conformément au second comparateur (383) si le premier signal de sortie est délivré depuis le premier comparateur (386).

12. Unité de récepteur OFDM selon chacune des revendications 1, 7 à 11, **caractérisée en ce qu'**elle comprend en outre un circuit de sortie (41, 42) qui est connecté aux bornes du circuit de décision (37, 37a) et qui est configuré pour émettre en sortie les premier et second signaux de décision (Iv1, Iv2).

F I G. 1

D1

pw1 → $f1 = \dfrac{pw1}{pw1+pw2}$ → f1 — 431

$f2 = \dfrac{pw2}{pw1+pw2}$ → f2

D2

pw2

432 434

433

Composition CKT

## F I G. 2

43

D1

lv1
pw1 → 341 → pw1' → $f1 = \dfrac{pw1'}{pw1'+pw2'}$ → f1 — 343

pw2' → $f2 = \dfrac{pw2'}{pw1'+pw2'}$ → f2

D2

lv2
pw2 → 342

344 346

345

Composition CKT

## F I G. 4

34

FIG.3

EP 1 301 003 B1

<u>29</u>

I-axis signal → SEL [0 / 1] 291 → Difference detecting CKT 292 → ⊗ 293 → ⊕ 294 → D 295 → Detection signal1

CTRL

Q-axis signal →

# FIG. 5

<u>33</u>

sig1 →

sig2 →

$$s1 = \frac{sig1}{sig1+sig2}$$

$$s2 = \frac{sig2}{sig1+sig2}$$

331

s1 → Decision signal1

s2 → Decision signal2

# FIG. 6

F I G. 7

EP 1 301 003 B1

FIG. 8

FIG. 10

FIG. 9

EP 1 301 003 B1

37a

sig1 → 381 ⊕ → diff → 382 Absolute value → abs_diff → 386 abs_diff<=upper → 387 → lv1

384 ~ upper

sig2 → 383 diff>0 → 385 → 388 → lv2

FIG. 11

39

in1 → 391 $s1 = \dfrac{in1}{in1+in2}$ → s1 → lv1

in2 → $s2 = \dfrac{in2}{in1+in2}$ → s2 → lv2

Decision CKT

FIG. 13

F I G. 12

EP 1 301 003 B1

F I G. 14

EP 1 301 003 B1

F I G. 15

EP 1 301 003 B1